# FASCICULE DE BREVET EUROPEEN

(11) **EP 1 337 479 B1**
(45) Date de publication et mention de la délivrance du brevet: **06.05.2004**
(21) Numéro de dépôt: 01976381.2
(22) Date de dépôt: 09.10.2001
(51) Int. Cl.: C02F 11/08, C02F 1/78, C02F 1/04, C02F 1/74, B01J 3/00, B01J 19/08, B01J 19/24, B01J 19/18

(54) **PROCEDE ET DISPOSITIF POUR L'OXYDATION EN EAU SUPERCRITIQUE DE MATIERES**
VERFAHREN UND VORRICHTUNG ZUR ÜBERKRITISCHEN NASSOXIDATION VON STOFFEN
METHOD AND DEVICE FOR OXIDISING MATERIALS IN SUPERCRITICAL WATER

(30) Priorité: 10.10.2000 FR 0012929
(43) Date de publication de la demande: 27.08.2003
(73) Titulaire: COMMISSARIAT A L'ENERGIE ATOMIQUE, 75752 Paris Cédex 15 (FR)
(72) Inventeur: JOUSSOT-DUBIEN, Christophe, F-30650 ROCHEFORT DU GARD (FR); DIDIER, Gérard, F-26230 ROUSSAS (FR); TURC, Hubert-Alexandre, F-30133 LES ANGLES (FR)
(74) Mandataire: Poulin, Gérard
(86) Numéro de dépôt international: PCT/FR2001/003101
(87) Numéro de publication internationale: WO 2002/030836

(56) Documents cités:
- GB-A- 647 169
- US-A- 4 564 458
- US-A- 5 008 085
- US-A- 5 358 646
- US-A- 5 421 998

## Description

### Domaine technique

La présente invention se rapporte à un procédé pour l'oxydation en eau supercritique de matières, ainsi qu'à un dispositif utilisable pour la mise en oeuvre de ce procédé. La présente invention fournit également un procédé de traitement d'un déchet.

On entend par matière toute substance ou composition susceptible d'être soumise à un procédé d'oxydation hydrothermale.

Les applications de ce procédé peuvent concerner par exemple la destruction de matières telles que des substances toxiques, des composés organiques tels que les solvants halogénés ou le traitement de matières telles que des effluents organiques fortement toxiques ou dangereux tels que par exemple des déchets contaminés, des explosifs, ainsi que des solvants, des composés biologiques et pharmaceutiques, des boues industrielles ou des effluents de l'industrie pétrolifère etc.

L'oxydation hydrothermale (OHT) est une technologie récente de traitement de déchets. Elle est réalisée au moyen d'eau sous pression et sous température comme milieu réactionnel pour faire réagir un oxydant avec le ou les composé(s) à dégrader.

L'oxydant peut être sous forme gazeuse - air, air enrichi en oxygène, ozone etc.- ou liquide - oxygène liquide, peroxyde d'oxygène etc.- alors que le comburant est majoritairement constitué de composés organiques sous forme liquide ou en suspension dans de l'eau. Il peut être par ailleurs pur ou dilué dans l'eau, à des concentrations variant de 1 à 20% en masse tel que décrit dans Frisch, A.M. (1997), Supercritical water oxydation. Standard Handbook of hazardous waste treatement and disposal H.M. Freeman, McGraw-Hill p.8.117-8.190.

Le point critique de l'eau, Tc = 374°C, Pc = 221 bars, permet de définir deux sous ensembles dans les procédés d'OHT :
- lorsque l'une des deux conditions opératoires de la réaction d'oxydation est située en deçà du point critique de l'eau, de tels procédés sont aussi nommés oxydation en voie humide (OVH), la réaction d'oxydation ayant lieu dans la phase aqueuse, et
- lorsque les deux conditions opératoires de la réaction d'oxydation sont situées au-delà du point critique, on parle d'OHT supercritique car la réaction a lieu dans de l'eau supercritique au sein d'une phase homogène où tous les réactifs sont solubilisés hormis les sels, dont les produits de solubilité décroissent consécutivement à la diminution de la permittivité électrique de l'eau avec l'augmentation de la pression ou de la température.

Le procédé OHT supercritique se distingue de l'OVH principalement par le fait que la réaction y est beaucoup plus rapide, les temps caractéristiques sont de l'ordre de la minute au lieu de dizaines de minutes, et souvent plus complète, les taux de destruction dépassent systématiquement 99,99% au lieu de 98% pour l'OVH. En revanche, l'OVH est moins sensible que l'OHT supercritique à la teneur en hétéroatomes de la matrice organique des déchets à traiter.

Du fait du positionnement des procédés OVH dans les basses pressions et basses températures, c'est à dire en dessous du point critique, ils n'entrent pas en concurrence avec les procédés supercritiques.

### Art antérieur

C'est au début des années 80 que les potentialités de destruction de déchets organiques dans l'eau supercritique ont été établies, et de nombreuses modifications ont été apportées depuis pour permettre le traitement de déchets organiques de plus en plus variés. Cependant l'exploitation à l'échelle industrielle restait encore à optimiser.

La technique de l'oxydation en milieu supercritique est actuellement mise en oeuvre dans une zone réactionnelle rudimentaire constituée d'un réacteur simple. Cette solution technologique présente l'avantage d'être facile à construire ainsi qu'à exploiter. En outre ses coûts en investissement et maintenance sont relativement faibles.

Cependant la composition des déchets qui peuvent être détruits dans ce type de réacteur est assez limitée en raison du dépôt des composés minéraux qui crée un bouchon ou à cause de la corrosion induite par la présence de composés halogénés. En effet, la présence de sels minéraux à des concentrations de l'ordre de 1% dans un réacteur d'eau supercritique génère des précipités qui se déposent sur les parois du réacteur. Par ailleurs, lorsque le déchet contient plus de quelques milligrammes de chlore, les aciers inoxydables ou les matériaux à base de nickel subissent une corrosion sous contrainte rédhibitoire à l'exploitation industrielle.

Aucun des développements n'a répondu aux contraintes du traitement de déchets contenant des composés corrosifs ou des sels minéraux.

Les objectifs des spécialistes dans cette technique sont les suivants :
- obtenir des taux de destruction toujours aussi élevés en diminuant le plus possible les temps de passage et la température de réaction,
- résister à la corrosion, et
- limiter la précipitation des sels minéraux.

Il est donc nécessaire de développer de nouveaux dispositifs pour résoudre les problèmes de corrosion rapide ou d'accumulation des sels tel que décrit dans Schmieder, H. and Abeln, J.(1999). SCWO : Facts and Hopes. GVC Fachausschuss "High Pressure Chemical Ingineering" Karlsruhe, p.81-86.

Par ailleurs quand il s'agit d'ajouter un tiers composé, par exemple pour augmenter la solubilité d'une nouvelle espèce chimique, les solutions actuelles ne s'appliquent qu'à un composé organique bien précis et ne peuvent donc être étendues à un mélange de déchets.

### Exposé de l'invention

La présente invention a précisément pour but de fournir un procédé de traitement d'une matière par oxydation hydrothermale qui ne présente pas les inconvénients et qui réponde aux objectifs précités.

Le procédé de la présente invention comprend les étapes suivantes :
a) une introduction d'un fluide comprenant de l'eau et un oxydant sous une pression supérieure à 22,1 MPa dans une zone annulaire et par une première extrémité d'un réacteur de forme essentiellement tubulaire comprenant une paroi externe et un tube interne, la zone annulaire du réacteur étant définie par la paroi externe et le tube interne,
b) un chauffage du fluide eau/oxydant dans ladite zone annulaire à une température supérieure à 374°C,
c) une introduction du fluide eau/oxydant sous pression et chauffé obtenu à l'étape b) dans le tube interne du réacteur au niveau d'une deuxième extrémité du réacteur, et une introduction simultanée de la matière à traiter dans ledit tube interne au niveau de ladite deuxième extrémité du réacteur,
d) un mélange du fluide eau/oxydant sous pression chauffé et de la matière à traiter dans une première partie dudit tube interne de manière à oxyder la matière à traiter, suivit d'un refroidissement du mélange fluide/oxydé dans une deuxième partie du tube interne, et
e) une évacuation isobare du mélange fluide/matière oxydé refroidit du réacteur directement à partir du tube interne au niveau de la première extrémité du réacteur,
le fluide et la matière parcourant de manière continue ou quasi continue le tube interne.

La matière peut être par exemple une de celles citées dans la présente description, par exemple la majeure partie des composés organiques oxydables dans de l'eau supercritique, par exemple les solvants aliphatiques tels que l'hexane, le dodécane, etc., les solvants aromatiques tels que le benzène, le phénol, le toluène, la pyridine, etc., les solvants halogénés tels que le chloroforme, le dichlorométhane, le trichloroéthane, etc.

Le procédé peut aussi être utilisé pour détruire une matière telle que des composés organiques toxiques ou dangereux tels que ceux constituant les effluents contaminés en radioéléments issus de l'industrie nucléaire tel que les solvants du cycle du combustible nucléaire, les huiles usées, les résines échangeuses d'ions, etc., les armes chimiques ou les explosifs, ainsi que des composés pharmaceutiques.

Selon l'invention, la matière peut être par exemple sous la forme d'un déchet à traiter par exemple liquide ou en suspension.

Aussi, la présente invention fournit également un procédé de traitement d'un déchet par oxydation hydrothermale comprenant notamment une étape consistant à utiliser un procédé de traitement d'une matière par oxydation hydrothermale selon l'invention, le déchet étant la matière.

Selon l'invention, l'oxydant peut par exemple être un gaz choisi dans un groupe comprenant de l'ozone et un mélange oxygène-azote, ou un liquide choisi dans un groupe comprenant du peroxyde d'hydrogène et de l'oxygène liquide.

Selon l'invention, l'oxydant est de préférence introduit avec l'eau dans le réacteur en une quantité d'environ 1 à 5 fois la quantité stoechiométrique nécessaire pour oxyder la matière. Cette quantité peut être déterminée notamment à partir de la quantité de matière à traiter, par exemple de déchet à détruire.

Par exemple dans le cas d'un déchet à traiter, celui-ci peut être mélangé avec le fluide soit pur, soit dilué dans de l'eau, par exemple avec un pourcentage massique compris entre 10 et 100%, soit additionné d'un tiers corps présent pour faciliter la réaction d'oxydation ou favoriser la précipitation de certains sels minéraux. Le tiers corps peut être par exemple la soude, le nitrate de sodium, l'acide nitrique.

Dans l'étape d) du procédé de l'invention, le mélange peut être réalisé par agitation du milieu réactionnel formé par le mélange fluide supercritique / matière à traiter. L'agitation permet d'une part de garantir un bon transfert thermique entre les flux et les zones de chauffage et de refroidissement, et d'autre part d'éviter la sédimentation ou l'accumulation de sels minéraux qui peuvent précipiter au cours du procédé. Elle permet ainsi d'assurer qu'un volume minimal est employé pour obtenir des rendements de destruction obtenus en OHT supercritique dans les configurations standards.

Selon l'invention le mélange du fluide eau/oxydant sous pression chauffé et de la matière à traiter dans le tube interne peut être réalisé par exemple au moyen d'une agitation suivant ou qui tend vers un régime équivalent à celui d'un réacteur parfaitement agité. Selon l'invention, le mélange du fluide eau/oxydant sous pression chauffé et de la matière à traiter dans le tube interne peut aussi être réalisé par exemple au moyen d'une agitation qui confine l'agitation à des volumes successifs de manière à maintenir un régime d'écoulement essentiellement quasi-piston dans le tube interne du mélange fluide eau/oxydant sous pression chauffé et matière traitée.

Selon l'invention, l'oxydation de la matière à l'étape d) dégageant de la chaleur, celle-ci peut être utilisée pour chauffer à contre courant le fluide eau/oxydant à l'étape b). Ainsi, selon l'invention, le fluide supercritique peut être chauffé dans la zone annulaire, par exemple entre 374°C et 600°C, d'une part par le mélange fluide supercritique / déchets passant à contre courant dans le tube interne, et d'autre part par un moyen de chauffage ou zone de chauffe tel que celui du dispositif de la présente invention.

Selon l'invention, dans l'étape e), le refroidissement du mélange fluide/matière oxydée dans le tube interne est de préférence réalisé sous forte agitation.

La présente invention fourni également un dispositif utilisable pour la mise en oeuvre du procédé de l'invention qui utilise un milieu supercritique. Ce dispositif comprend :
- un corps principal constitué d'une paroi de forme essentiellement tubulaire muni à une première de ses extrémités d'une bride, de moyens d'étanchéité, d'une première entrée pour les constituants du milieu supercritique, et d'une sortie d'évacuation de matière traitée, la bride étant éventuellement munie d'un passage étanche pour recevoir un arbre tournant, et à une deuxième de ses extrémités d'une deuxième entrée pour introduire la matière à traiter dans le dispositif, le corps principal, la bride et les moyens d'étanchéité étant réalisés dans des matériaux résistants aux pressions des milieux supercritiques,
- un tube interne placé à l'intérieur du corps principal de manière à former une zone annulaire le long dudit corps principal, le tube interne comprenant une lumière, une première extrémité et une deuxième extrémité, la première extrémité étant fixée à la bride de telle manière que la lumière du tube interne soit seule et de manière étanche par rapport à la zone annulaire en communication à la fois avec la sortie de matière traitée et avec le passage, la deuxième extrémité du tube interne étant au niveau de la deuxième extrémité du corps principal de sorte que la lumière soit à ce niveau en communication avec la zone annulaire et avec la deuxième entrée de manière à ce que la matière à traiter puisse être introduite, à ce niveau, non pas dans la zone annulaire mais directement dans la lumière du tube interne,
- un moyen d'agitation placé dans la lumière du tube interne et actionné au moyen de l'arbre tournant,
- un moyen de réfrigération placé autour du corps principal et sur une première partie de celui-ci de manière à refroidir la matière traitée se trouvant dans le tube interne avant son évacuation du dispositif par la sortie de matière traitée, et
- un moyen de chauffage placé autour du corps principal et sur une deuxième partie de celui-ci de manière à chauffer les constituants du milieu supercritique pour former le milieu supercritique avant qu'il ne pénètre dans le tube interne au niveau de sa deuxième extrémité.

Le tube interne 19 est placé de préférence à une distance de la deuxième entrée du corps principal garantissant le non reflux de la matière ou de ses produits de dégradation vers l'extrémité du tube interne, protégeant ainsi le corps principal de tout contact avec la matière en milieu supercritique.

Selon l'invention, l'entrée pour les constituants du milieu supercritique peut être réalisée par un piquage de la bride.

Selon l'invention, le dispositif peut comprendre en outre un garnissage métallique disposé dans tout ou partie de la zone annulaire. Ce garnissage permet d'augmenter la turbulence de l'écoulement du fluide dans cette zone, assurer un meilleur transfert thermique, et rendre possible un transfert thermique par conduction entre le tube interne 19 et le corps principal.

Selon l'invention, le dispositif peut comprendre en outre un injecteur permettant d'introduire la matière à traiter directement dans le tube interne, à partir de la deuxième entrée, de préférence à une distance conséquente de l'extrémité 27 du tube interne afin d'empêcher le reflux de matière en milieu supercritique. L'injecteur peut être par exemple un tube d'un diamètre inférieur à celui du tube interne.

Selon l'invention, un autre moyen de réfrigération peut être placé autour du corps principal, à l'extrémité où est injectée la matière.

Selon l'invention, le moyen d'agitation peut comprendre des éléments rotatifs choisi parmi une hélice, une turbine, une pale plate, et une ancre. Par exemple dans le cas de l'utilisation de pales, en fonction de la géométrie des pales, l'effet d'agitation peut, soit tendre vers un régime équivalent à un réacteur parfaitement agité, soit, si des intercalaires sont insérés sur les pales, confiner cette agitation à des volumes successifs pour s'efforcer de conserver un régime d'écoulement quasi-piston. Par exemple dans le cas des hélices, leur nombre peut être variable et choisi notamment en fonction de la turbulence à imposer au système.

Selon l'invention, l'arbre tournant peut être associé à un moteur d'entraînement couplé à un variateur de fréquence permettant d'obtenir des vitesses de rotation des pales comprises entre 0 et 1500 tours par minute.

Selon l'invention, le corps principal et la bride peuvent être par exemple en acier inoxydable ou à base de nickel ou en tout matériau connu présentant les propriétés requises précitées.

Selon l'invention, les moyens d'étanchéité peuvent comprendre des moyens permettant d'assurer une jointure étanche entre le corps principal et la bride, de préférence jusqu'à 35x10⁵ Pa et à des températures allant par exemple de 20 à 250°C. Ces moyens d'étanchéité peuvent être par exemple un type de joint soit métallique, par exemple plat ou hélicoflex (marque déposée),soit en polymère haute résistance. Les joints connus de l'homme du métier pour cet usage peuvent être utilisés.

Selon l'invention, les moyens d'étanchéité peuvent comprendre des moyens d'étanchéité au niveau du passage pour recevoir l'arbre tournant. La température du fluide au niveau de cette étanchéité ne dépassant pas en principe 250°C il peut s'agir par exemple d'un joint tournant de type joint d'étanchéité haute pression pour axe rotatif. Les joints connus de l'homme du métier pour cet usage peuvent être utilisés. Un couplage magnétique de type standard implanté dans la bride peut également être utilisé.

Selon l'invention, les matériaux constituant l'injecteur, le tube interne, le moyen d'agitation peuvent être choisis identiques ou différents en raison de leur capacité à résister aux agressions chimiques. Il n'est pas nécessaire qu'ils aient une bonne tenue à la pression. Il n'est pas non plus obligatoire que ces pièces soient constituées du même matériau. Ce dernier peut être choisi par exemple en fonction de la nature chimique du déchet à détruire. Par exemple, il peut être choisi dans un groupe comprenant un acier inoxydable, un alliage de nickel résistant à la chaleur et à l'oxydation, un alliage de type [Ni58, Fe20 Mo20], du titane, et de la céramique. Il peut s'agir par exemple d'un Inconel (marque de commerce) ou d'un Hastelloy (marque de commerce).

Dans un dispositif selon la présente invention, toutes ces pièces ne subissent aucune contrainte mécanique importante. De préférence elles ont un bon comportement à la température notamment jusqu'à 600°C et à la corrosion. Ces pièces sont aussi facilement changeables et peuvent être considérées, dans certains cas, comme des consommables.

Selon l'invention, le tube interne peut par exemple avoir une épaisseur d'environ 1 mm.

En couplant, selon la présente invention, le tube interne à un système d'agitation, le dispositif présente plusieurs avantages de fonctionnement exposés ci-dessous.

L'enveloppe formant le tube interne est en équipression, c'est-à-dire qu'elle n'est pas utilisée pour garantir la tenue aux hautes pressions du réacteur. Il est donc possible d'utiliser différents matériaux présentant une bonne résistance à la corrosion mais une moins bonne résistance aux contraintes mécaniques. Dans les cas où les échanges thermiques doivent être effectués sur des surfaces de faibles dimensions, les matériaux qui ont une bonne conductivité thermique seront privilégiés par exemple le titane, les métaux nobles, etc., par rapport aux matériaux connus pour leur très bonne résistance chimique mais peu conducteurs tels que la céramique.

Bien que l'emploi de matériaux résistant mieux à la pression allonge la durée de vie du réacteur vis-à-vis de la corrosion, l'enveloppe interne en forme de tube standard est facile d'accès et son changement implique peu de main d'oeuvre et un faible coût.

En outre, les éléments internes du dispositif ou réacteur, qui sont en contact direct avec le déchet ou avec les éléments issus de l'oxydation de ce dernier, ne sont pas soumis aux contraintes de fortes pressions et peuvent ainsi être constitués de matériaux résistant à la corrosion ou facilement renouvelables.

Le dispositif de la présente invention permet donc de réaliser une réaction d'oxydation dans de l'eau supercritique au moyen d'un réacteur possédant une enveloppe interne et un agitateur dans les zones de réaction et de refroidissement.

Elle permet d'avoir l'une des extrémités du réacteur froide en imposant un sens de circulation à contre-courant de part et d'autre de la paroi. Cela entraîne que le système d'agitation utilisé nécessite seulement de garantir une étanchéité à haute pression avec des températures inférieures à 250°C et non pas aux conditions supercritiques de l'eau (P_{c} > 221 bars et T_{c} > 374°C).

Selon l'invention, le moyen de réfrigération placé autour du corps principal peut être par exemple une double enveloppe réfrigérante.

Selon l'invention, le moyen de chauffage placé autour du corps principal peut être par exemple sous la forme d'un manchon. Il peut par exemple s'agir de colliers chauffants. De tels colliers sont connus de l'homme du métier.

Selon l'invention, la longueur totale du dispositif et le diamètre interne du corps principal dépendent :
- de l'intégration du tube interne ou tube réactionnel et, éventuellement de pièces nécessaires pour son alignement avec le corps principal,
- de contraintes mécaniques : par exemple Pmax = 350 bars,
de contraintes thermiques : par exemple la deuxième extrémité du corps principal peut être à 600°C, tandis que la première extrémité, au niveau de la bride, avec l'étanchéité, à 250°C,
- de l'intégration de l'agitation dans le tube interne,
- du temps de séjour du déchet à oxyder dans la zone chaude, par exemple à une température T > 400°C, compris par exemple entre 10 s et 5 min, et
- du temps de séjour du flux oxydé dans une zone de refroidissement suffisamment longue dans le tube interne pour assurer une température de sortie du déchet traité comprise entre 20 et 250°C.

Selon l'invention, le réacteur présente préférentiellement une forme longitudinale dont la plus grande dimension correspond à l'axe de l'agitation.

La présente invention fournit en conséquence une zone réactionnelle d'oxydation hydrothermale permettant notamment de :
- réaliser la réaction d'oxydation entre la matière, par exemple le déchet, et l'oxydant en milieu eau supercritique, c'est-à-dire T > 374° et P > 22,1 MPa ;
- regrouper les zones de réaction et de refroidissement, et d'y garantir un écoulement fortement turbulent pour une meilleure efficacité des transferts thermiques et des cinétiques de réaction, ainsi qu'empêcher la sédimentation des sels minéraux précipités avant, pendant et après l'oxydation des matières;
- utiliser un tube interne ou enveloppe interne simple sans contrainte de pression qui est en contact avec la matière, par exemple le déchet, initiale et le flux oxydé dans les zones de haute température. Ce tube ou enveloppe interne peut être interchangeable afin soit d'adapter le matériau de construction à la nature de la matière à traiter, par exemple au déchet à éliminer, soit d'utiliser un matériau peu onéreux pour effectuer en maintenance le remplacement des parties corrodées ;
- mettre en oeuvre un moyen d'agitation de la zone réactionnelle située dans le tube interne standard et simple à installer.

Les moyens technologiques fournis par la présente invention sont notamment :
- la définition d'une enceinte sous pression dont les joints d'étanchéité des ouvertures de grand diamètre sont à des températures inférieures à 250°C ;
- l'utilisation d'un tube interne non soumis aux contraintes de pression dans le corps principal, qui peut être appelé un autoclave, sous pression, pour confiner les composés organiques et les réactions d'oxydation à une zone résistante à ou admettant la corrosion et n'ayant pas à garantir la tenue en pression constituée par la lumière du tube interne;
- la possibilité d'utiliser un couplage magnétique standard à haute pression dans une zone basse température pour actionner les pales d'un agitateur dans les zones à des températures de 20 à 600°C.

Le réacteur d'oxydation en eau supercritique de la présente invention se distingue notamment de ceux de l'art antérieur par la mise en oeuvre d'un système d'agitation dans une enveloppe interne en équipression.

Selon la présente invention, l'agitation a notamment pour rôle d'assurer un régime fortement turbulent afin :
- de faciliter les transferts thermiques pour chauffer les fluides avant d'entrer dans la zone de réaction, mais aussi pour refroidir les fluides et matières traitées après l'oxydation ;
- d'assurer une très bonne homogénéité de la température et de la composition du mélange réactionnel sur l'axe radial du réacteur ;
- de garantir des temps de séjour courts pour obtenir des taux de destruction optimaux et donc de travailler avec un volume sous pression et sous température plus faible que ceux de l'art antérieur ;
- de maintenir en suspension toutes les particules soit qui sont contenues dans le déchet initial, soit qui se forment après l'oxydation de la matrice organique du déchet. En évitant la sédimentation des sels minéraux dans la zone réactionnelle et dans la zone de refroidissement, en particulier au passage du point critique, la formation de bouchon ne se produit plus, contrairement aux procédés de l'art antérieur, et il est alors possible de fonctionner sur de longues périodes avec des déchets dont la teneur en composés minéraux est par exemple comprise entre 0 et 20%.

D'autres caractéristiques et avantages apparaîtront encore à la lecture des exemples fournis ci-dessous à titre illustratif et non limitatif en référence à la figure annexée.

### Figure

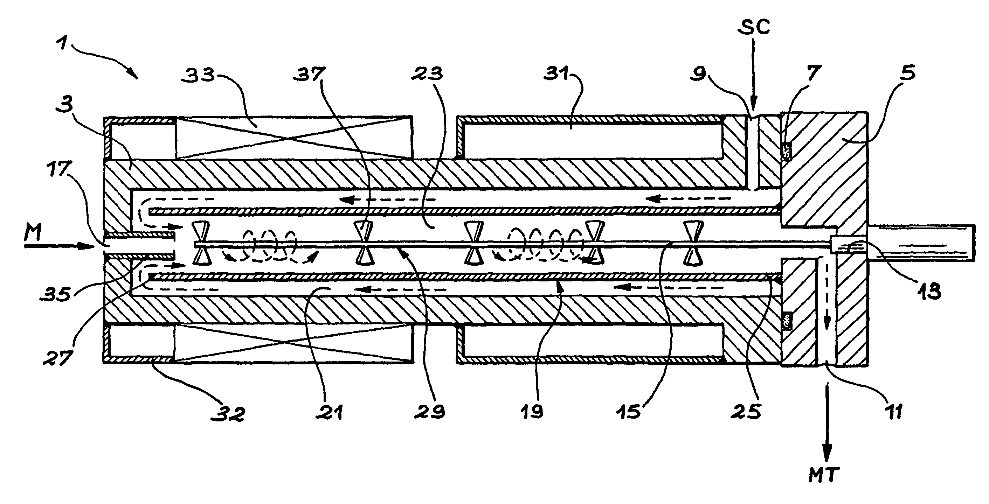

La figure 1 est un schéma d'un mode de réalisation du dispositif selon la présente invention.

### Exemples

### DISPOSITIF

La figure 1 est un schéma d'un mode de réalisation du dispositif selon la présente invention. Il représente en particulier une zone réactionnelle selon la présente invention.

Dans ce mode de réalisation, le dispositif 1 comprend un corps principal 3 de forme essentiellement tubulaire muni à une première de ses extrémités d'une bride 5, de moyens 7 d'étanchéité, d'une première entrée 9 pour les constituants du milieu supercritique, et d'une sortie d'évacuation 11 de matière traitée. La bride 5 est munie d'un passage 13 étanche pour recevoir un arbre tournant 15.

A la deuxième extrémité du corps principal 3 est prévue une deuxième entrée 17 pour introduire la matière à traiter dans le dispositif. Le corps principal, la bride et les moyens d'étanchéité sont réalisés dans des matériaux résistants aux pressions et températures des milieux supercritiques.

Un tube interne 19 est placé à l'intérieur du corps principal 3. Il forme une zone annulaire 21 le long dudit corps principal. Ce tube interne comprend une lumière 23, une première extrémité 25 et une deuxième extrémité 27. La première extrémité 25 est fixée à la bride 5 de telle manière que la lumière 23 du tube interne 19 soit, seule et de manière étanche par rapport à la zone annulaire 21, en communication à la fois avec la sortie 11 de matière traitée et avec le passage 13. La deuxième extrémité 27 du tube interne est au niveau de la deuxième extrémité du corps principal 3 de sorte que la lumière 23 soit à ce niveau en communication avec la zone annulaire 21 et avec la deuxième entrée 17. Ainsi, la matière à traiter peut être introduite, à ce niveau, non pas dans la zone annulaire 21 mais directement dans la lumière 23 du tube interne 19.

Un moyen d'agitation 29 constitué d'un arbre tournant 15 l'actionnant et d'élément rotatifs 37 est placé dans la lumière 23 du tube interne 19. Un joint tournant de type joint d'étanchéité haute pression pour axe rotatif (non représenté) est placé au niveau du passage 13 pour recevoir l'arbre tournant 15.

Un moyen de réfrigération 31 est placé autour du corps principal et sur une première partie de celui-ci de manière à refroidir la matière traitée se trouvant dans le tube interne 19 avant son évacuation du dispositif 1 par la sortie 11 de matière traitée.

Un autre moyen de réfrigération 32 peut aussi être placé sur la deuxième extrémité du corps principal.

Un moyen de chauffage 33 est placé autour du corps principal et sur une deuxième partie de celui-ci de manière à chauffer les constituants du milieu supercritique pour former le milieu supercritique avant qu'il ne pénètre dans le tube interne 19 au niveau de sa deuxième extrémité 27.

La partie externe ou corps principal 3 du dispositif de la présente invention dont la fonction est notamment de maintenir une pression comprise entre 220 et 350 bars et d'assurer un bon transfert de chaleur entre la zone réactionnelle interne et les échangeurs, sera décrite tout d'abord, ensuite seront décrits les éléments internes.

### Le corps principal ou autoclave

Le corps principal 3 est réalisé en acier inoxydable. Il en est de même pour la bride 5. Le moyen 7 d'étanchéité, ou jointure, entre le corps et la bride est un joint métallique hélicoflex (marque déposée), ou autre joint ayant une tenue pour une température > 250°C.

La bride 5 est pourvue d'un piquage ou sortie d'évacuation 11 pour évacuer le mélange milieu supercritique / déchets traité du tube interne 19 après la réaction d'oxydation et le refroidissement consécutif. Ce piquage ou passage ne permet de laisser passer que le flux provenant de l'intérieur du tube réactionnel 19. Il est suffisamment large pour faciliter la circulation d'un fluide contenant de la matière en suspension.

Un garnissage métallique (non représenté) sous forme de billes inox peut être placé dans la zone annulaire. L'utilité d'un tel garnissage est expliquée ci-dessus.

Un variateur de fréquence est couplé au moteur d'agitation permettant d'obtenir des vitesses de rotation des pales comprises entre 0 et 1500 tours/min.

### Tube réactionnel

Le tube interne ou tube réactionnel 19 est le siège de la réaction d'oxydation en eau supercritique.

Sa paroi est d'une épaisseur d'environ 1 mm, ses faces interne et externe étant en équipression. A l'intérieur, est placé un agitateur, constitué d'un axe central 15 et de pales 37.

La température à l'intérieur du tube 19 peut monter jusqu'à 600°C dans la zone où sont oxydés les composés organiques des déchets. Cette température est ensuite abaissée entre 20 et 250°C dans la partie proche de l'enveloppe réfrigérante 31.

### PROCEDE

L'eau et l'oxydant sont introduits froids sous pression par le piquage 9 dans la zone annulaire 21 entre le tube interne 19 et la paroi haute pression constituant le corps principal 3 pour former un mélange diphasique. Ce mélange diphasique transfère une partie des calories provenant du flux chaud constitué par le mélange fluide supercritique/déchets présent dans le tube interne vers la double enveloppe réfrigérée où circule un fluide réfrigéré.

Le fluide, c'est à dire le mélange d'eau et d'oxydant, circule tout d'abord dans la zone annulaire 21 entre le corps principal 3, formant l'enceinte du dispositif, et le tube interne 19. Cette zone ou espace annulaire 21 est le siège d'un transfert de chaleur entre le fluide à l'intérieur du tube interne 19 et le moyen de réfrigération ou refroidisseur 31.

Toujours dans la zone annulaire 21, le fluide eau + oxydant est ensuite amené à 400°C par un échangeur externe ou moyen de chauffage 33. Le produit eau + oxydant est préchauffé par ailleurs par une partie des calories provenant du fluide circulant dans la lumière du tube 19, à contre-courant.

Arrivé à la deuxième extrémité du corps principal ou enceinte le fluide chaud pénètre dans le tube interne 19 en même temps que le déchet. La proportion de composés organiques constituant le déchet dans l'eau est préférentiellement comprise entre 1 et 15% massique au niveau de l'entrée du tube interne 19.

Le fluide supercritique et le déchet sont mélangés à l'intérieur du tube interne 19 et forment le mélange réactionnel.

Le déchet, ainsi que le mélange déchet/fluide supercritique, n'entrent pas en contact avec les parois internes du corps principal 3 car le déchet est directement introduit à l'intérieur du tube interne 19 au moyen de l'injecteur 35 réalisé simplement au moyen d'un petit tube de très faible diamètre.

Le point d'injection du déchet via l'injecteur 35 est de préférence situé à une distance de l'extrémité 27 du tube 19 supérieure à 5 fois au moins le diamètre interne du tube 19, de manière à garantir le non reflux de la matière ou de ses produits de dégradation vers l'extrémité 27, protégeant ainsi le corps 3 de tout contact avec la matière en milieu supercritique.

La réaction d'oxydation à lieu dans le tube interne. Elle dégage de la chaleur qui est partiellement utilisée pour chauffer à contre-courant le mélange initial eau + oxydant situé dans la zone annulaire 21.

Le flux de mélange réactionnel est ensuite refroidi dans le tube interne 19 en étant fortement agité par l'axe 29 muni des pales 37 pour garantir un bon transfert de chaleur. Les pales 37 servent aussi à maintenir en suspension les sels minéraux qui auraient précipité. L'effluent froid est alors dirigé de manière isobare vers la sortie 11.

Les inventeurs ont oxydé dans un premier temps du dodécane dans de l'eau supercritique à 450°C et à 3x10⁵ Pa en utilisant le dispositif et le procédé exposés ci-dessus.

Ils ont obtenu des rendements supérieurs à 99,9%.

Ils ont ensuite expérimenté les conditions opératoires suivantes données dans le tableau 1 ci-dessous, pour traiter des éléments constitutifs de déchets donnés dans le tableau 2 suivant :

**Tableau 1 :**

| Conditions opératoires | | | |
|---|---|---|---|
| **Pression** | **Température** | **Nature de** **l'oxydant** | **Concentration massique du** **déchet à l'entrée de la zone** **réactionnelle (%)** |
| 221-350 | 380-650 | O₂ H₂O₂ Mélanges O₂-N₂ | 1-15 |

**Tableau 2 :**

| Compositions de déchets oxydables | |
|---|---|
| **Eléments constitutifs des déchets** | **Proportion des constituants** **(%)** |
| Carbone, hydrogène, oxygène, azote | 0-100 |
| Halogènes (Chlore, Fluor, phosphore...) | 0-10 |
| Sels minéraux | 0-20 |

Les rendements obtenus sont les mêmes que ceux précités.

## Revendications

1. Procédé de traitement d'une matière par oxydation hydrothermale comprenant les étapes suivantes :
a) une introduction d'un fluide comprenant de l'eau et un oxydant sous une pression supérieure à 22,1 MPa dans une zone annulaire et par une première extrémité d'un réacteur de forme essentiellement tubulaire comprenant une paroi externe et un tube interne, la zone annulaire du réacteur étant définie par la paroi externe et le tube interne,
b) un chauffage du fluide eau/oxydant dans ladite zone annulaire à une température supérieure à 374°C,
c) une introduction du fluide eau/oxydant sous pression et chauffé obtenu à l'étape b) dans le tube interne du réacteur au niveau d'une deuxième extrémité du réacteur, et une introduction simultanée de la matière à traiter dans ledit tube interne au niveau de ladite deuxième extrémité du réacteur,
d) un mélange du fluide eau/oxydant sous pression chauffé et de la matière à traiter dans une première partie dudit tube interne de manière à oxyder la matière à traiter, suivit d'un refroidissement du mélange fluide/oxydé dans une deuxième partie du tube interne, et
e) une évacuation isobare du mélange fluide/matière oxydée refroidi du réacteur directement à partir du tube interne au niveau de la première extrémité du réacteur,
le fluide et la matière parcourant de manière continue ou quasi continue le tube interne.

2. Procédé selon la revendication 1, dans lequel l'oxydation de la matière à l'étape e) dégageant de la chaleur, celle-ci est utilisée pour chauffer à contre courant le fluide eau/oxydant à l'étape b).

3. Procédé selon la revendication 1, dans lequel le mélange du fluide eau/oxydant sous pression chauffé et de la matière à traiter dans le tube interne est réalisé au moyen d'une agitation suivant ou qui tend vers un régime équivalent à celui d'un réacteur parfaitement agité.

4. Procédé selon la revendication 1, dans lequel le mélange du fluide eau/oxydant sous pression chauffé et de la matière à traiter dans le tube interne est réalisé au moyen d'une agitation qui confine l'agitation à des volumes successifs de manière à maintenir un régime d'écoulement essentiellement quasi-piston dans le tube interne, du mélange fluide eau/oxydant sous pression chauffé et matière traitée.

5. Procédé selon la revendication 1, dans lequel le refroidissement du mélange fluide/matière oxydée dans le tube interne est réalisé sous forte agitation.

6. Procédé selon la revendication 1, dans lequel la matière est un déchet.

7. Procédé de traitement d'un déchet par oxydation hydrothermale comprenant une étape consistant à utiliser un procédé selon la revendication 1, le déchet étant la matière.

8. Procédé selon l'une quelconque des revendications précédentes dans lequel l'oxydant est un gaz choisi dans un groupe comprenant de l'ozone et un mélange oxygène-azote, ou un liquide choisi dans un groupe comprenant du peroxyde d'hydrogène et de l'oxygène liquide.

9. Procédé selon l'une quelconque des revendications 1 à 7 précédentes, dans lequel l'oxydant est introduit avec l'eau dans le réacteur en une quantité d'environ 1 à 5 fois la quantité stoechiométrique nécessaire pour oxyder la matière.

10. Dispositif 1 d'oxydation utilisable pour le traitement d'une matière dans un milieu supercritique comprenant :
- un corps principal 3 de forme essentiellement tubulaire muni à une première de ses extrémités d'une bride 5, de moyens 7 d'étanchéité, d'une première entrée 9 pour les constituants du milieu supercritique, et d'une sortie d'évacuation 11 de matière traitée, la bride 5 étant munie éventuellement d'un passage 13 étanche pour recevoir un arbre tournant 15, et à une deuxième de ses extrémités d'une deuxième entrée 17 pour introduire la matière à traiter dans le dispositif, le corps principal, la bride et les moyens d'étanchéité étant réalisés dans des matériaux résistants aux pressions et températures des milieux supercritiques,
- un tube interne 19 placé à l'intérieur du corps principal 3 de manière à former une zone annulaire 21 le long dudit corps principal, le tube interne comprenant une lumière 23, une première extrémité 25 et une deuxième extrémité 27, la première extrémité 25 étant fixée à la bride 5 de telle manière que la lumière 23 du tube interne 19 soit seule et de manière étanche par rapport à la zone annulaire 21 en communication à la fois avec la sortie 11 de matière traitée et avec le passage 13, la deuxième extrémité 27 du tube interne étant au niveau de la deuxième extrémité du corps principal 3 de sorte que la lumière 23 soit à ce niveau en communication avec la zone annulaire 21 et avec la deuxième entrée 17 de manière à ce que la matière à traiter puisse être introduite, à ce niveau, non pas dans la zone annulaire 21 mais directement dans la lumière 23 du tube interne 19 et sans reflux de celle-ci vers la zone annulaire 21,
- un moyen d'agitation 29 placé dans la lumière 23 du tube interne 19 et actionné au moyen de l'arbre tournant 15,
- un moyen de réfrigération 31 placé autour du corps principal et sur une première partie de celui-ci de manière à refroidir la matière traitée se trouvant dans le tube interne 19 avant son évacuation du dispositif 1 par la sortie 11 de matière traitée, et
- un moyen de chauffage 33 placé autour du corps principal et sur une deuxième partie de celui-ci de manière à chauffer les constituants du milieu supercritique pour former le milieu supercritique avant qu'il ne pénètre dans le tube interne 19 au niveau de sa deuxième extrémité 27.

11. Dispositif selon la revendication 10, comprenant en outre un garnissage métallique disposé dans tout ou partie de la zone annulaire 21.

12. Dispositif selon la revendication 10, comprenant en outre un injecteur permettant d'introduire la matière à traiter directement dans le tube interne 19, à partir de la deuxième entrée 17.

13. Dispositif selon la revendication 12, dans lequel l'injecteur est un tube 35 d'un diamètre inférieur à celui du tube interne 19.

14. Dispositif selon la revendication 10, dans lequel le tube interne 19 a une épaisseur d'environ 1 mm.

15. Dispositif selon la revendication 10, dans lequel l'arbre tournant est associé à un moteur d'entraînement couplé à un variateur de fréquence permettant d'obtenir des vitesses de rotation des pales comprises entre 0 et 1500 tours par minute.

16. Dispositif selon la revendication 10, dans lequel moyen d'agitation 29 comprend des éléments rotatifs 37 choisi parmi une hélice, une turbine, une pale plate, et. une ancre.

17. Dispositif selon la revendication 10, dans lequel l'injecteur, le tube interne 19, le moyen d'agitation 29 sont constitués d'un matériau identique ou différent choisi dans un groupe comprenant un acier inoxydable, un alliage de nickel résistant à la chaleur et à l'oxydation, un alliage de type [Ni58, Fe20 Mo20], du titane, et de la céramique.

18. Dispositif selon la revendication 10, dans lequel le moyen de réfrigération 31 placé autour du corps principal est une double enveloppe réfrigérante.

19. Dispositif selon la revendication 10, dans lequel le moyen de chauffage 33 placé autour du corps principal est sous la forme d'un manchon.

## Patentansprüche

1. Verfahren zur Behandlung eines Stoffes durch Nassoxidation, die folgenden Schritte umfassend:
a) Einspeisen eines Wasser und ein Oxidationsmittel umfassenden Fluids mit einem Druck über 22,1 MPa in eine ringförmige Zone und durch ein erstes Ende eines im Wesentlichen ringförmigen Reaktors mit einer Außenwand und einem Innenrohr, wobei die ringförmige Zone des Reaktors definiert wird durch die Außenwand und das Innenrohr,
b) Erhitzen des Wasser/Oxidationsmittel-Fluids in der genannten ringförmigen Zone auf eine Temperatur über 374°C,
c) Einleiten des erhitzten und unter Druck stehenden Wasser/Oxidationsmittel-Fluids in das Innenrohr des Reaktors in Höhe eines zweiten Endes des Reaktors, und simultanes Einspeisen des zu behandelnden Stoffes in das genannte Innenrohr in Höhe des genannten zweiten Endes des Reaktors,
d) Mischen des erhitzten, unter Druck stehenden Wasser/Oxidationsmittel-Fluids und des zu behandelnden Stoffes in einem ersten Teil des genannten Innenrohrs, um den zu behandelnden Stoff zu oxidieren, gefolgt von einem Abkühlen der Mischung aus Fluid und oxidiertem Stoff in einem zweiten Teil des Innenrohrs, und
e) isobares Evakuieren der abgekühlten Mischung aus Fluid und oxidiertem Stoff aus dem Reaktor, direkt aus dem Innenrohr in Höhe des ersten Endes des Reaktors,
wobei das Fluid und der Stoff das Innenrohr kontinuierlich oder quasi-kontinuierlich durchfließen.

2. Verfahren nach Anspruch 1, bei dem die Wärme, freigesetzt durch die Oxidation des Stoffes in Schritt e), benutzt wird, um im Gegenstrom das Wasser/Oxidationsmittel-Fluid in Schritt b) zu erhitzen.

3. Verfahren nach Anspruch 1, bei dem das Mischen des erhitzten, unter Druck stehenden Wasser/Oxidationsmittel-Fluids und des in dem Innenrohr zu behandelnden Stoffes durch Umrühren erfolgt, wobei der Betriebszustand eines perfekt umgerührten Reaktors erreicht oder angestrebt wird.

4. Verfahren nach Anspruch 1, bei dem das Mischen des erhitzten, unter Druck stehenden Wasser/Oxidationsmittel-Fluids und des in dem Innenrohr zu behandelnden Stoffes mittels einer Umrührung erfolgt, bei der das Umrühren auf sukzessive Volumen beschränkt ist, so dass in dem Innenrohr im Wesentlichen ein Quasi-Kolbenförderungsbetrieb der Mischung aus geheiztem, unter Druck stehendem Wasser/Oxidationsmittel-Fluid und behandeltem Stoff aufrechterhalten wird.

5. Verfahren nach Anspruch 1, bei dem die Abkühlung der Mischung aus Fluid und oxidiertem Stoff in dem Innenrohr bei starkem Umrühren erfolgt.

6. Verfahren nach Anspruch 1, bei dem der genannte Stoff ein Abfall bzw. Abfallprodukt ist.

7. Verfahren zur Behandlung eines Abfalls durch hydrothermale Oxidation, das einen Schritt zur Anwendung eines Verfahrens nach Anspruch 1 umfasst, wobei der Abfall der genannte Stoff ist.

8. Verfahren nach einem der vorangehenden Ansprüche, bei dem das Oxidationsmittel ein Gas ist, ausgewählt aus einer Gruppe, die Ozon und eine Sauerstoff-Stickstoff-Mischung oder eine Flüssigkeit umfasst, die aus einer Gruppe gewählt wird, die Wasserstoffperoxid und flüssigen Sauerstoff umfasst.

9. Verfahren nach einem der vorangehenden Ansprüche 1 bis 7, bei dem das Oxidationsmittel dem Reaktor zusammen mit dem Wasser in einer Menge zugeführt wird, die ungefähr 1- bis 5-mal der Menge entspricht, die zum Oxidieren des Stoffes stöchiometrisch notwendig ist.

10. Oxidationsvorrichtung zur Behandlung eines Stoffes in einem überkritischen Milieu, umfassend:
- ein im Wesentlichen röhrenförmiges Hauptgehäuse (3) mit einem Flansch (5) an einem ersten seiner Enden, Abdichtungsmittel (7), einem ersten Eingang (9) für die Bestandteile des überkritischen Milieus und einem Entleerungsausgang (11) des behandelten Stoffes, wobei der Flansch (5) eventuell einen dichten Durchgang (13) zur Aufnahme einer Welle (15) aufweist, und einem zweiten Eingang (17) an einem zweiten seiner Enden, um der Vorrichtung den zu behandelnden Stoff zuzuführen, wobei das Hauptgehäuse, der Flansch und die Abdichtungsmittel aus Materialien gefertigt sind, welche die Drücke und Temperaturen der überkritischen Milieus aushalten,
- ein Innenrohr (19), im Innem des Hauptgehäuses (3) so angeordnet, dass längs dieses Hauptgehäuses eine ringförmige Zone (21) vorhanden ist, wobei das Innenrohr ein Loch bzw. einen Kanal (23), ein erstes Ende (25) und ein zweites Ende (27) aufweist und das erste Ende (25) so an dem Flansch (5) befestigt ist, dass der Kanal (23) des Innenrohrs (19) ausschließlich und in Bezug auf die ringförmige Zone (21) in dichter Weise zugleich mit dem Ausgang (11) des behandelten Stoffes und dem Durchgang (13) kommuniziert, und das zweite Ende (27) des Innenrohrs, das sich in Höhe des zweiten Endes des Hauptgehäuses (3) und des zweiten Eingangs (17) befindet, mit dem Kanal (23) an dieser Stelle so kommuniziert, dass der zu behandelnde Stoff nicht in die ringförmige Zone (21) eingespeist wird, sondern direkt in den Kanal (23) des Innenrohrs (19), ohne Rückfluss in die ringförmige Zone (21),
- eine Rühreinrichtung (29), angeordnet in dem Kanal (23) des Innenrohrs (19) und angetrieben durch die Welle (15),
- eine Kühleinrichtung (31), angebracht um das Hauptgehäuse herum, auf einem ersten Teil von diesem, so dass der vor seiner Entleerung aus der Vorrichtung (1) durch den Ausgang (11) in dem Innenrohr (19) befindliche behandelte Stoff gekühlt wird, und
- eine Heizeinrichtung (33), angebracht um das Hauptgehäuse herum, auf einem zweiten Teil von diesem, um die Bestandteile des überkritischen Milieus zu erhitzen, um das überkritische Milieu zu erzeugen, ehe es in Höhe seines zweiten Endes (27) in das Innenrohr (19) eindringt.

11. Vorrichtung nach Anspruch 10, die außerdem eine metallische Auskleidung der ringförmigen Zone (21) oder eines Teils von ihr umfasst.

12. Vorrichtung nach Anspruch 10, die außerdem einen Injektor umfasst, der die direkte Einspeisung des zu behandelnden Stoffes in das Innenrohr (19) aus dem zweiten Eingang (17) ermöglicht.

13. Vorrichtung nach Anspruch 12, bei welcher der Injektor ein Rohr (35) ist, dessen Innendurchmesser kleiner ist als der des Innenrohrs (19).

14. Vorrichtung nach Anspruch 10, bei der das Innenrohr (19) eine Dicke von ungefähr 1 mm hat.

15. Vorrichtung nach Anspruch 10, bei der die Welle mit einem Antriebsmotor verbunden ist, der mit einem Frequenzvariator gekoppelt ist, der ermöglicht, Drehgeschwindigkeiten der Blätter zu realisieren, die enthalten sind zwischen 0 und 1500 Umdrehungen pro Minute.

16. Vorrichtung nach Anspruch 10, bei der die Rühreinrichtung (29) Rotationselemente (37) aufweist, ausgewählt unter einer Schraube, einer Turbine, einem flachen Blatt und einem Anker.

17. Vorrichtung nach Anspruch 10, bei welcher der Injektor, das Innenrohr (19) und die Rühreinrichtung (29) aus gleichem oder unterschiedlichem Material sind, ausgewählt aus einer Gruppe, die einen nichtoxidierenden Stahl, eine hitze- und oxidationsfeste Nickellegierung, eine Legierung des Typs [Ni58, Fe20 Mo20], Titan und Keramik umfasst.

18. Vorrichtung nach Anspruch 10, bei der die um das Hauptgehäuse herum angebrachte Kühleinrichtung (31) ein doppelter Kühlmantel ist.

19. Vorrichtung nach Anspruch 10, bei der die um das Hauptgehäuse herum angebrachte Heizeinrichtung (33) die Form einer Muffe bzw. eines Mantels aufweist.

## Claims

1. Method for treating a material by hydrothermal oxidation comprising the following steps :
a) introducing a fluid comprising water and an oxidizer under a pressure above 22.1 MPa into an annular zone and at one end of an essentially tubular reactor comprising an outer wall and an inner tube, the annular zone of the reactor being defined by the outer wall and the inner tube ;
b) heating the water / oxidizer fluid in said annular zone to a temperature above 374 °C ;
c) introducing the heated and pressurized water / oxidizer fluid obtained in step b) into the inner tube of the reactor at a second end of the reactor and simultaneous introduction of the material to be treated into said inner tube at said second end of the reactor;
d) mixing the heated and pressurized water / oxidizer fluid and the material to be treated into a first part of said inner tube in such a fashion as to oxidize the material to be treated, followed by cooling of the fluid / oxidized material mixture into a second part of the inner tube, and
e) isobaric evacuation of the cooled fluid / oxidized material mixture from the reactor directly from the inner tube to the first end of the reactor,
the fluid and the material continuously or quasi-continuously running through the inner tube.

2. Method according to Claim 1, wherein the oxidation of the material at step e) releases heat, which is used for counter-current heating of the water / oxidizer fluid at step b)

3. Method according to Claim 1, wherein mixing of the pressurized heated water / oxidizer fluid and of the material to be treated in the inner tube is produced by means of an agitation operating in a state equivalent to that of a perfectly-agitated reactor or in a state which tends towards that of a perfectly agitated reactor.

4. Method according to Claim 1, wherein the pressurized and heated water / oxidizer fluid mixture and the material to be treated in the inner tube is produced by an agitation, which confines the agitation to successive volumes in such a fashion as to maintain a substantially quasi-piston flow regimen in the inner tube of the pressurized heated water / oxidizer fluid mixture and the treated material.

5. Method according to Claim 1, wherein cooling of the fluid / oxidized material mixture in the inner tube is realized under strong agitation.

6. Method according to Claim 1, wherein the material is a waste.

7. Method for treating a waste by hydrothermal oxidation comprising a step consisting in utilization of a method according to Claim 1, the waste being the material.

8. Method according to any one of the above claims, wherein the oxidant is a gas chosen from a group comprising ozone and an oxygen - nitrogen mixture or a liquid chose from the group comprising hydrogen peroxide and liquid oxygen.

9. Method according to any one of the above Claims 1 to 7, wherein the oxidant is introduced with the water into the reactor in a quantity of approximately 1 to 5 times the stoichiometric quantity necessary for oxidizing the material.

10. Oxidation device 1 that can be used for the treatment of a material in a supercritical medium, comprising :
- a main body 3 comprised of a substantially tubular wall equipped at a first end with a flange 5, sealing means 7, a first inlet 9 for the components of the supercritical mixture and an evacuation outlet 11 for the treated material, the flange 5 being eventually equipped with a tight passage 13 for receiving a rotary shaft 15 and a second of its ends having a second inlet 17 for introducing the material to be treated into the device, the main body, the flange and the sealing means being made of materials resistant to the pressures of the supercritical media ;
- an inner tube 19 disposed on the inside of the main body 3 in such a fashion as to form an annular zone 21 along the length of said main body, the inner tube comprising a opening or lumen 23, a first end 25 and a second end 27, the first end 25 being fixed with the flange 5 in such a fashion that the lumen 23 of the inner tube 19 is isolated and in such a fashion tight with respect to the annular zone 21 in communication at once with the treated material outlet 11 and with the passage, the second end 27 of the inner tube being at the second end of the main body 3 in such a fashion that the lumen 23 is at this level in communication with the annular zone 21 and with the second material inlet 17 such that the material to be treated can be introduced at this point and not into the annular zone but directly into the lumen 23 of the inner tube 19 and without reflux of same to the annular zone 21 ;
- a agitation means 29 disposed in the lumen 23 of the inner tube 19 and operated by means of the rotating shaft 15 ;
- a refrigeration means 31 disposed around the main body and over a first part of same in such a fashion as to cool the treated material situated inside the tube 19 prior to its evacuation from the device 1 through the treated material outlet 11, and
- a heating means 33 disposed around the main body and over a second part of same in such a fashion as to heat the components of the supercritical medium in order to form the supercritical medium prior to its entry into the inner tube at its second end 27.

11. Device according to Claim 10, comprising in addition a metal fitting disposed in all or in part of the annular zone 21.

12. Device according to Claim 10, comprising in addition an injector making possible introduction of the material to be treated directly into the inner tube 19 from the second inlet 17.

13. Device according to Claim 12, wherein the injector is a tube 35 having a diameter less than that of the inner tube 19.

14. Device according to Claim 10, wherein the inner tube 19 has a thickness of approximately 1 mm.

15. Device according to Claim 10, wherein the rotating shaft is associated with a drive motor coupled to a frequency variator enabling obtaining rotational speed of the blades in the range of 0 to 1,500 rotations per minute.

16. Device according to Claim 10, wherein the agitation means 29 comprises rotating elements 37 chosen from among a helix, a turbine, a flat blade and an anchor.

17. Device according to Claim 10, wherein the injector, the inner tube 19, the agitation means 29 are made of an identical or a different material chosen from the group comprising a stainless steel, a nickel allow resistant to heat and oxidation, a [N58, Fe20 Mo20] type alloy of titanium and ceramic.

18. Device according to Claim 10, wherein the refrigeration means 31 placed around the main body is a double refrigerating envelope.

19. Device according to Claim 10, wherein the heating means 33 placed around the main body is in the form of a sleeve.
